# EUROPÄISCHE PATENTANMELDUNG

(11) **EP 0 787 578 A2**
(43) Veröffentlichungstag der Anmeldung: **06.08.1997**
(21) Anmeldenummer: 97101609.2
(22) Anmeldetag: 03.02.1997
(51) Int. Cl.: B32B 3/12, B32B 31/04

(54) **Mehrlagiges Bauelement und Verfahren zu seiner Herstellung**

(30) Priorität: 05.02.1996 AT 200/96
(71) Anmelder: C.A. GREINER & SÖHNE GESELLSCHAFT M.B.H., A-4550 Kremsmünster (AT)
(72) Erfinder: Eder, Bernhard, 4020 Linz (AT); Lasch, Karl, 4482 Ennsdorf (AT)
(74) Vertreter: Secklehner, Günter, Dr.

(57) **Zusammenfassung**

Die Erfindung betrifft ein mehrlagiges Bauelement (1), bestehend aus einem Stützkörper (4), der mit zumindest einer Deckschichte (2, 3) verbunden ist, wobei die Deckschichte (2, 3) aus einem Tragkörper (6) mit Fasern bzw. Fäden gebildet und in einer Schichte (7) aus thermoplastischem Kunststoff (8) eingebettet ist. Der Stützkörper (4) ist durch eine Wabenanordnung (5) mit mehreren Hohlräumen (16) gebildet, von welchen jeder von mehreren Stegen (14) umgrenzt und mit diesen von den unmittelbar benachbarten Hohlräumen (16) getrennt ist. Einander gegenüberliegende Stirnkanten (18) der Stege (14) sind in zwei voneinander distanzierten Ebenen angeordnet. Die Hohlräume (16) sind im wesentlichen parallel zu einer senkrecht zu den Ebenen verlaufenden Symmetrieachse (17) ausgerichtet und die Deckschichten (2, 3) sind mit ihren einander zugewandten Flächen (19, 20) auf den Stirnkanten (18) angeformt und kraft- bzw. formschlüssig mit diesen verbunden.

## Beschreibung

Die Erfindung betrifft ein mehrlagiges Bauelement, wie es im Oberbegriff des Anspruches 1 beschrieben ist, sowie ein Verfahren und eine Vorrichtung zum Herstellen eines mehrlagigen Bauelementes, wie es im Oberbegriff der Ansprüche 27 und 37 beschrieben ist.

Es ist bereits ein Verfahren zur Herstellung von Sandwichelementen gemäß EP 0 266 224 B1 bekannt. Dieses Sandwichelement besteht aus einer Oberflächenlage, z.B. einem Geflecht oder Gewirke aus Polyester, Viskose, Glasfasern oder einer beliebigen Kombination davon, einer dahinter angeordneten ersten Verstärkungsschichte und einem thermisch verformten, zelligen Kernmaterial, einer zweiten Verstärkungslage und einer Decklage. Die Verbindung der einzelnen Schichten, insbesondere der Oberflächenlage mit dem Kernmaterial erfolgt mit einem Kleber, wobei in die Kleberschichte gleichzeitig die erste Verstärkungsschichte eingelegt wird und an dem Kernelement über eine weitere Kleberschichte die weitere Verstärkungsschichte befestigt wird. Die Herstellung dieses Sandwichelementes erfolgt in einem kontinuierlichen Produktionsprozeß, wobei die einzelnen Lagen teilweise von einer Rolle abgezogen und durch die Verarbeitungsmaschinen hindurchgeführt werden und die Formgebung sowie das Aktivieren der einzelnen Kleberschichten im Sandwichbauteil durch ein Form- und Präge- und gegebenenfalls Schnittwerkzeug im Zuge des kontinuierlichen Durchlaufes durch die Produktionsstraße erfolgt. Damit kann zwar die Herstellung derartiger Sandwichbauteile beschleunigt und vereinfacht werden, die erzielten Festigkeiten im Bereich der Deckschichten sind jedoch in vielen Bereichen nicht ausreichend.

Der vorliegenden Erfindung liegt die Aufgabe zugrunde, ein mehrlagiges Bauelement zu schaffen, welches auch mit ausreichend eigensteifen Deck schichten versehen werden kann und welches ein geringes Raumgewicht aufweist.

Diese Aufgabe der Erfindung wird durch die Merkmale im Anspruch 1, insbesondere dessen Kennzeichenteil, gelöst. Die überraschenden und nicht vorhersehbaren Vorteile dieser Lösung liegen darin, daß nunmehr ein thermoplastischer Kunststoff verwendet wird, der in einem Temperaturbereich aufgeschmolzen bzw. erweicht werden kann, in welchen die den Stützkörper bildende Wabenanordnung mit niederem Raumgewicht eingebettet wird. Damit ist es möglich, ein Bauelement mit geringem Raumgewicht zu schaffen, bei dem jedoch eine hohe Oberflächen- und/oder Kantendruckfestigkeit erzielt wird.

Durch die Ausgestaltung nach Anspruch 2 wird ein geringes Raumgewicht bzw. Gesamtgewicht des Bauelementes erreicht.

Vorteilhaft sind aber auch Ausführungsvarianten nach den Ansprüchen 3 bis 5, da dadurch eine kraft- und formschlüssige Verbindung des Stützkörpers mit den Deckschichten erreicht wird und gleichzeitig eine Oberflächenstruktur am Bauelement dargestellt werden kann. Zusätzlich können innere Spannungen im Bauteil erzeugt werden, welche ebenfalls zu einer Versteifung des Bauteils führen.

Von Vorteil ist aber auch eine Ausbildung nach Anspruch 6, da dadurch der Stützkörper als einzelne Baueinheit hergestellt werden kann und anschließend der Stützkörper mit den Deckschichten verbunden werden kann.

Durch die Anpassung des verwendeten Thermoplastes gemäß Anspruch 7 kann eine universelle Abstimmung der Bauelemente auf unterschiedliche Einsatzfälle erfolgen.

Die vielfältigen Ausbildungsmöglichkeiten der Deckschichte, die eine universelle Einsetzbarkeit derartig hergestellter Bauelemente in den verschiedensten Bereichen der Schalldämmung, z.B. der Innenverkleidung von Fahrzeugen, im Baubereich und dgl., ermöglicht, zeigen die Merkmale im Anspruch 8 oder 9.

Vorteilhaft ist aber auch eine Ausführungsvariante nach Anspruch 10, da dadurch der Tragkörper bereits mit den notwendigen Materialien beschichtet werden kann, die aufgrund des verwendeten Pulvers in der Produktion einfach gehandhabt und z.B. auch ohne Anhaften von der Rolle verarbeitet werden können, sodaß der thermoplastische Kunststoff erst dann, wenn er entsprechend erwärmt wird, verflüssigt wird und damit auch eine gleichmäßige Verteilung über den Tragkörper sichergestellt ist. Es empfiehlt sich natürlich auch die Anordnung einer Folie aus thermoplastischem Kunststoff, die dann entsprechend erweicht bzw. die dann plastifiziert oder verflüssigt wird, da damit die Herstellung der erfindungsgemäßen Bauelemente stark vereinfacht wird.

Aber auch eine Ausbildung nach Anspruch 11 ist möglich, da damit die Energiekosten zum Verflüssigen des thermoplastischen Materials geringer sind, bzw. auch die unterschiedlichsten Rohmaterialien für diesen thermoplastischen Kunststoff verwendet werden können.

Durch die Ausgestaltung nach Anspruch 12 wird ein gutes Anhaften der thermoplastischen Schichte an dem Tragkörper erreicht, wodurch eine intensive und hochfeste Verbindung zwischen dem Tragkörper und der thermoplastischen Schichte erzielbar ist.

Durch die Weiterbildung nach Anspruch 13 ist es möglich, den thermoplastischen Kunststoff zur Formgebung bzw. zur Einbettung des Tragkörpers heranzuziehen, ohne daß die Temperaturen überschritten werden, die zu einer nachteiligen Veränderung des Stützkörpers führen.

Weiters ist durch die Ausführungsvariante nach Anspruch 14 eine Entsorgung derartiger Bauelemente relativ einfach möglich, da die Struktur des Stützkörpers, auch wenn dieser aus Papier bzw. Karton besteht, während der Trennung nicht zerstört wird und somit auch der Stützkörper nach einem entsprechenden Zerreißen und Aufarbeiten wieder für die Herstellung eines neuen Stützkörpers herangezogen werden können.

Vorteilhaft ist weiters auch die Ausgestaltung nach Anspruch 15, da der thermoplastische Kunststoff neben der Herstellung der ausreichend starken Deckschichte auch gleich ein vollflächiges Verbinden und Aufbringen einer Decklage ermöglicht, ohne daß eine zusätzliche Kleberschichte aufgebracht werden muß.

Als vorteilhaft hat sich auch eine Weiterbildung nach Anspruch 16 erwiesen, da dadurch auf bereits vorgefertigte Bauelemente vor dem Aufbringen von Deckschichten noch Verstärkungselemente aufgebracht bzw. eingelegt werden können.

Vorteilhafte Weiterbildungen für das Tragelement sind in den Ansprüchen 17 bis 20 beschrieben, da dadurch ein vliesartiger Aufbau erreicht wird, welcher einfach herzustellen und zu bearbeiten ist und trotz der losen Einbettung der Langfäden eine ausreichende Versteifung als Tragkörper erreicht wird. Ebenfalls wir dadurch auch eine gute Verbindung zwischen den Decklagen und der Wabenanordnung des Stützkörpers erreicht.

Durch die Ausführungsform nach Anspruch 21 wird ein stabiler Aufbau des Bauelementes, insbesondere zwischen den beiden Deckschichten und der dazwischen angeordneten Wabenanordnung erreicht, sodaß auch seitliche Druckkräfte aufgenommen werden können.

Von Vorteil ist aber auch eine Ausführungsform nach Anspruch 22, da somit ein Abschluß der Wabenanordnung rundum durchlaufend über den gesamten Außenumfang des Bauelementes erfolgt, wodurch ein Eintritt von Feuchtigkeit in Richtung der Wabenanordnung gesichert vermieden ist.

Durch die Weiterbildung nach Anspruch 23 kann durch die jeweilige Länge des Verbindungsbereiches zwischen den einzelnen Deckschichten eine unterschiedliche Festigkeit des Bauelementes erreicht werden.

Vorteilhaft ist weiters auch eine Ausgestaltung nach Anspruch 24 oder 25, da dadurch im Verbindungsbereich eine zu starke Deformation der Wabenanordnung vermieden wird und gleichzeitig damit auch ein entsprechendes optisches Aussehen des Stirnrandbereiches erzielt wird.

Von Vorteil ist auch eine Ausführungsvariante nach Anspruch 26, da somit auch im Verbindungsbereich ein stabiler Zusammenhalt der Wabenanordnung mit den beiden Deckschichten, insbesondere deren Kunststoff, erzielbar ist.

Die Erfindung umfaßt weiters auch ein Verfahren zur Herstellung eines mehrlagigen Bauelementes, wie dies im Oberbegriff des Anspruches 27 beschrieben ist.

Dieses Verfahren ist durch die Maßnahmen insbesondere im Kennzeichenteil des Anspruches 27 gekennzeichnet. Durch diese Art der Herstellung ist es nunmehr möglich, eine Taktproduktion für Großserien derartiger Bauelemente einfach durchzuführen, wobei das Handling zur Herstellung der Bauelemente bei den einzelnen Bauteilen erheblich vereinfacht werden kann. Dazu kommt, daß nunmehr einige der verwendeten Materialien direkt von der Rolle weg verarbeitet werden können und vielfach der Auftrag von flüssigen Komponenten, insbesondere von mit Lösungsmitteln versetzten Klebern und dgl., nicht mehr benötigt wird. Dazu kommt, daß mit geringfügigen Abweichungen im Produktionsablauf Bauelemente für die unterschiedlichsten Anforderungen nach dem gleichen System hergestellt werden können.

Durch die Maßnahmen nach Anspruch 28 wird erreicht, daß auch eine räumliche Formgebung des Elementes unter Ausnutzung der Temperatur, die für das Erweichen bzw. Verflüssigen des thermoplastischen Kunststoffes notwendig ist, erfolgen kann, wobei es auch möglich ist, eine unterschiedliche Oberflächenstruktur durch unterschiedlich starke Verdichtung des Stützkörpers herzustellen.

Eine noch stärkere räumliche Verformung ist durch das Vorgehen nach Anspruch 29 erzielbar. Dadurch ist es unter anderem auch in einzelnen Fällen möglich, mit geringeren Druckkräften zum räumlichen Verformen des Bauelementes das Auslangen zu finden.

Durch die Verwendung eines Kunststoffes gemäß Anspruch 30 und der entsprechenden Erwärmung wird es möglich, eine Fülle von unterschiedlichen Materialien für den Stützkörper einzusetzen, ohne daß diese ihre mechanischen Eigenschaften verlieren.

Durch die Maßnahmen nach Anspruch 31 wird in einfacher Weise ein getrenntes Entsorgen der einzelnen Lagen bzw. Schichten des Bauelementes sichergestellt.

Durch die Ausführungsvariante gemäß Anspruch 32 kann der thermoplastische Kunststoff nahezu zur Gänze aus dem Tragkörper entfernt werden.

Vorteilhaft ist aber auch ein Vorgehen nach Anspruch 33, da in einem Arbeitsvorgang mit einer für die mechanischen Eigenschaften des Bauelementes benötigten Tragschichte gleichzeitig die Verbindung zu den unterschiedlichsten Decklagen hergestellt werden kann.

Durch die Ausführungsvariante gemäß Anspruch 34 kann der Stützkörper für das Bauelement vorgefertigt werden, auf den anschließend die Deckschichten aufgebracht werden.

Vorteilhaft ist aber auch ein Vorgehen nach Anspruch 35, da durch das unterschiedliche Verpressen der Oberfläche des Bauelementes eine Oberflächenstruktur am Bauelement dargestellt werden kann.

Durch die Maßnahme nach Anspruch 36 kann ein einfaches Anbringen der Einlegeteile, welche beispielsweise Befestigungselemente darstellen können, innerhalb des Bauelementes erzielt werden, wodurch auch ein stabiler Zusammenhalt der Einlageteile mit dem Bauelement erzielt werden kann.

Die Erfindung umfaßt weiters eine Vorrichtung, wie sie im Oberbegriff des Anspruches 37 beschrieben ist.

Diese Vorrichtung ist durch die Merkmale, insbesonders im Kennzeichenteil des Anspruches 37, gekennzeichnet. Vorteilhaft ist dabei, daß nunmehr ein Inline-Verfahren geschaffen werden kann, bei dem vor allen dann, wenn der gleiche Tragkörper für die beiden Deckschichten verwendet wird, mit einer Fertigungsanlage für das Zuführen der Decklagen und das Einbringen des thermoplastischen Kunststoffes zur Herstellung des Bauelementes das Auslangen gefunden werden kann. Dadurch ist es aber auch möglich, daß im Anschluß an das Zubringen der Deckschichte mehrere Formwerkzeuge vorgesehen werden können, die von einer kontinuierlichen Beschickungsanlage abwechselnd beschickt werden können, wodurch der Ausstoß einer derartigen Fertigungsvorrichtung erheblich erhöht werden kann.

Schließlich ist auch noch eine Ausbildung der Vorrichtung nach Anspruch 38 von Vorteil, da dadurch die einzelnen Decklagen während des Form- und Verformungsvorganges und dem Aushärten in einer exakten Position gehalten werden könne, wobei ein Verlegen dieser Vakuumschlitze dadurch verhindert werden kann, daß nach dem Zusammenpressen und Positionieren der Deckschichten und des Stützkörpers in der Form über diese Vakuumschlitze gegebenenfalls Luft zur Kühlung für die rasche Erstarrung des Bauelementes zugeführt werden kann.

Die Erfindung wird im nachfolgenden anhand der in den Zeichnungen angeführten Ausführungsbeispiele näher erläutert.

Es zeigen:
- Fig. 1: ein erfindungsgemäß ausgestattetes, mehrlagiges Bauelement mit einem Stützkörper in perspektivischer Ansicht, geschnitten und stark vergrößerter schematischer Darstellung;
- Fig. 2: das Bauelement nach Fig. 1 räumlich verformt, in Seitenansicht, geschnitten und vereinfachter, schematischer Darstellung;
- Fig. 3: eine Vorrichtung zur Herstellung eines erfindungsgemäßen mehrlagigen Bauelementes in Seitenansicht und vereinfachter, schematischer Darstellung;
- Fig. 4: eine andere und gegebenenfalls eigenständige, erfindungsgemäße Ausführungsform eines Tragelements in perspektivisch vereinfachter, schematischer Darstellung;
- Fig. 5: ein erfindungsgemäß ausgestattetes, mehrlagiges Bauelement mit einem Stützkörper und dem Tragelement nach Fig. 4 in perspektivischer Ansicht, geschnitten und stark vergrößerter, schematischer Darstellung;
- Fig. 6: eine weitere und gegebenenfalls für sich eigenständige, erfindungsgemäße Weiterbildung des mehrlagigen Bauelements, mit zusätzlichen Einlageteilen, in Seitenansicht, geschnitten und vereinfachter, schematischer Darstellung.

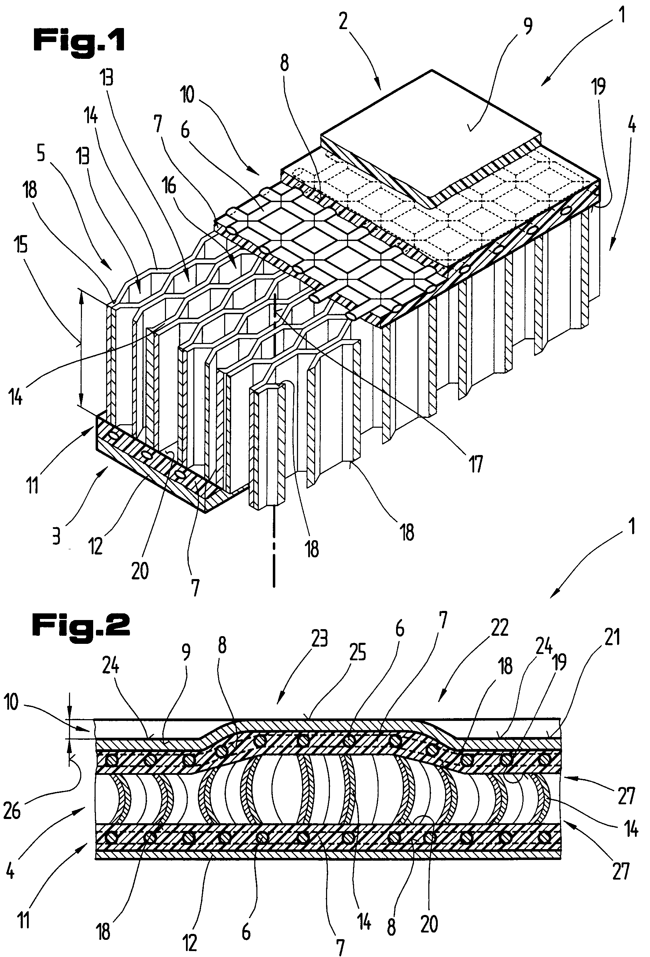

In Fig. 1 ist ein mehrlagiges Bauelement 1 gezeigt, welches aus zwei Deckschichten 2, 3 besteht, zwischen welchen ein Stützkörper 4 angeordnet ist. Es ist aber auch selbstverständlich möglich, nur eine der beiden Deckschichten 2, 3 am Stützkörper 4 anzuordnen.

Der Stützkörper 4 ist aus einer Wabenanordnung 5 gebildet, wobei die Wabenanordnung 5 aus verschiedensten Materialien, wie z.B. Papier, Karton, Aluminium oder Kunststoff und in unterschiedlicher Zellenform und Zellenweite, gebildet sein kann, auf der die Deckschichten 2, 3 angeordnet sind. Die beiden Deckschichten 2, 3 werden durch einen faser- bzw. fadenförmigen Tragkörper 6 aus Natur- und/oder Kunstmaterialien, z.B. ein Netz, Gewirke, Gewebe, Geflecht, Gitter oder Vlies aus Fasern bzw. Fäden aus Glas, Metall, Kevlar, Graphit, Kunststoff, Keramik, Naturfasern, Karbon oder Textil gebildet, der in eine Schichte 7 aus thermoplastischem Kunststoff 8 eingebettet ist, welche am Stützkörper 4 angeformt ist. Der thermoplastische Kunststoff 8 wird durch den faser- bzw. fadenförmigen Tragkörper 6 verstärkt und übernimmt gleichzeitig die kraft- und/oder formschlüssige Verbindung zwischen dem Tragkörper 6 und dem Stützkörper 4. Die Schichte 7 aus dem thermoplastischen Kunststoff 8 kann z.B. durch eine Wirrlage aus einzelnen Fasern bzw. Fäden gebildet sein, welche bei Druck- und/oder Temperaturbelastung ineinander verschmelzen und so den Tragkörper 6 in sich einbetten. Weiters kann der Tragkörper 6 aus Naturstoffen und/oder Glasfasern und/oder Polyesterfasern gebildet sein, wobei der Tragkörper 6 je nach Anwendungsfall in Mengen von 10 % bis 80 % dem Kunststoff 8 der Deckschichten 2, 3 zugesetzt ist.

Wie weiters im Bereich der Deckschichte 2 schematisch angedeutet ist, ist es auch möglich, über die Schichte 7 aus dem thermoplastischen Kunststoff 8, wie z.B. Polypropylen, gleichzeitig auch eine Decklage 9, z.B. einen Stoff, ein Gewirke, Gewebe, einen Teppich oder ein Vlies, anzuformen. Als besonders vorteilhaft hat sich eine Polymethanfolie oder -platte oder ein Baumwollfaservlies erwiesen, wodurch insbesondere die Schalldämmeigenschaften verbessert werden können. Als Werkstoff für den Tragkörper 6 kann aber auch Polyurethan verwendet werden.

Damit bildet die Schichte 7 aus thermoplastischem Kunststoff 8 nicht nur ein durch den Tragkörper 6 verstärktes Tragelement 10 bzw. 11, sondern ist gleichzeitig auch die Verbindungsschichte zwischen dem Stützkörper 4, dem Tragkörper 6 und gegebenenfalls der weiteren Decklage 9.

Ein besonderer Vorteil eines derart ausgebildeten Bauelementes 1 liegt aber vor allem darin, daß zumindest eine harte, widerstandsfähige Deckschichte 2 bzw. dessen Tragelement 10 und gegebenenfalls die Decklage 9 von der weiteren Deckschichte 3 bzw. deren Tragelement 11 oder einer Decklage 12 elastisch gedämpft und durch die Wabenanordnung 5 distanziert ist. Damit können diese beiden Deckschichten 2, 3 unabhängig voneinander schwingen, und es kann dadurch eine gute Schalldämmung erreicht werden, wie sie vor allem im Kraftfahrzeugwesen bzw. bei Raumtrennwänden oder dgl. mit besonderem Vorteil, z.B. für die Körperschalldämmung, einsetzbar ist.

Die Wabenanordnung 5 besteht aus einzelnen Waben 13, welche sich zwischen Stegen 14 ausbilden. In Berührungsbereichen der einzelnen Waben 13 werden die Stege 14 der einzelnen Waben 13 miteinander verbunden, wobei die Stege 14 bei einer Ausbildung durch die Wabe 13 aus Papier und/oder Karton durch verkleben erfolgen kann, sodaß ein entsprechender Grundkörper für die Herstellung des Bauelementes 1 erzeugt werden kann, wobei auf Stirnkanten der Stege 14 anschließend die Deckschichten 2, 3 aufgebracht werden. Die Waben 13 der Wabenanordnung 5 können aus verschiedenen Zellenformen, beispielsweise Sechseckwaben mit verschiedensten Zellenweiten gebildet werden und weisen eine Druckfestigkeit zwischen 0,5 kg/cm² bis 5 kg/cm², insbesondere 1,0 kg/cm² bis 4,0 kg/cm², auf.

Der Stützkörper 4 kann durch eine einzige Wabenanordnung 5 oder aus mehreren nebeneinander angeordneten Wabenanordnungen 5 mit einer vorgegebenen Dicke 15 gebildet sein, die bevorzugt durch Zuschneiden der Wabenanordnung 5 hergestellt wird. Bei der Herstellung des Bauelementes 1 mit den Deckschichten 2, 3 und dem Stützkörper 4 bleiben Hohlräume 16 der Waben 13 unausgefüllt, sodaß das Bauelement 1 ein geringes Raumgewicht aufweist. Selbstverständlich ist es möglich, die Hohlräume 16 der Waben 13 mit einem feinkörnigen Material auszufüllen und somit eine bessere Lärmdämmung des Bauelementes 1 zu erzielen. Durch eine mögliche Variation der Dicke 15 der Wabenanordnung 5 lassen sich Bauelemente 1 in Form einer Sandwichbauweise herstellen, wodurch sich die Biege- sowie Festigkeitseigenschaften je nach gewünschtem Einsatzzweck auf einfache Art und Weise verändern lassen.

Der Vorteil liegt vor allem darin, daß durch die widerstandsfähigen Deckschichten 2, 3 unter Verwendung der mit dem Tragkörper 6 verstärkten Schichte 7 aus thermoplastischem Kunststoff 8 eine hohe Oberflächen- und/oder Kantendruckfestigkeit erreicht wird und andererseits das Gesamtgewicht derartiger Bauelemente 1 durch das geringe Raumgewicht des Stützkörpers 4 gering gehalten werden kann.

Selbst wenn es im Zuge der Erwärmung bei der Anformung der Schichte 7 aus thermoplastischem Kunststoff 8 an den Stützkörper 4, z.B. in dessen Oberflächenbereich, zu Verformungen der Wabenanordnung 5, insbesondere der Stege 14, führen kann, wird dadurch das Raumgewicht des Stützkörpers 4 nicht verändert, sodaß die Vorteile des geringen Gesamtgewichtes nicht verändert werden.

Die Deckschichten 2, 3 sind dabei so auf den Stützkörper 4 aufgebracht, daß die von den einzelnen Waben 13 gebildeten Hohlräume 16 senkrecht zu den Deckschichten 2, 3 verlaufen, d.h. daß eine in Längsrichtung der Hohlräume 16 verlaufende Symmetrieachse 17 senkrecht zu den Deckschichten 2, 3 angeordnet ist und somit jede Stirnkante 18 der einzelnen Stege 14 mit den zu dem Stützkörper 4 zugewandten Flächen 19, 20 der Deckschichten 2, 3 verbunden ist. Dabei bilden die einzelnen Stirnkanten 18 der Stege 14 jeweils in etwa eine Ebene aus, wobei die beiden Ebenen durch das Ausmaß der Dicke 15 der Wabenanordnung 5 voneinander distanziert sind.

Diese Anordnung der Wabenanordnung 5 ist von Vorteil, da damit die Druckfestigkeit der Wabenanordnung 5 bei einer Stauchung der Stege 14, die durch das Verbinden der Deckschichten 2, 3 mit dem Stützkörper 4 erfolgen kann, aufrecht erhalten bleibt. Dies wird noch zusätzlich dadurch verstärkt, daß die Stege 14 in Richtung der Dicke 15 im unverformten Zustand einen relativ biegesteifen Druckkörper ausbilden. Weiters bilden die einzelnen Stege 14 quer zur Dicke 15 einen abwechselnd abgewinkelten, bahnförmigen Bauteil aus, wobei die jeweils einander zugewandten Abschnitte von unmittelbar benachbarten Stegen 14 an Berührungsbereichen aneinander angeformt sind. Durch die abwechselnde Verformungsrichtung der einzelnen Stegabschnitte bilden sich somit quer zur Symmetrieachse 17 abwechselnd Verbindungsbereiche und Hohlräume 16 aus.

Für den thermoplastischen Kunststoff 8 können selbstverständlich die unterschiedlichsten Materialien, wie z.B. Ethylen, Polyethylen, Polyamid, Polypropylen, Polystyrol, ABS, Polyvinylchlorid, Polyimid oder ein sonstiges Thermoplast, welches bei Temperaturen um zumindest 80°C bis 250°C, bevorzugt 180°C, zähplastisch bzw. flüssig ist, verwendet werden. Je nach gewähltem Kunststoff 8 kann die Temperatur zwischen 80°C und 180°C betragen, bei welcher dieser zumindest zähflüssig ist und bei Temperaturen zwischen 150°C und 250°C flüssig und/oder die Haftung sehr gering, z.B. zwischen 5N/5cm und 30N/5cm ist.

Die Art, wie der thermoplastische Kunststoff 8 auf den Tragkörper 6 bzw. den Stützkörper 4 aufgebracht wird, ist im Rahmen der Erfindung frei wählbar. Er kann entweder in pastenförmiger Konsistenz bzw. Granulat auf den bevorzugt von einer Rolle ablaufenden Tragkörper 6 aufgetragen oder in nahezu flüssiger Konsistenz aufgespritzt werden, die bei Raumtemperatur nur gering haftend sind. Es ist aber auch möglich, ihn in Pulverform auf den Tragkörper 6 aufzutragen bzw. in Art einer Vorbeschichtung aufzubringen oder als Folie bzw. Vlies einseitig oder beidseitig auf den Tragkörper 6 aufzulegen bzw. diesen in den thermoplastischen Kunststoff 8 einzubetten.

In Fig. 2 ist ein mehrlagiges Bauelement 1 gezeigt, wobei soweit wie möglich, für gleiche Teile gleiche Bezugszeichen verwendet werden.

Dieses Bauelement 1 besteht ähnlich wie das in Fig. 1 beschriebene aus dem Stützkörper 4, der entsprechend den Ausführungen zu Fig. 1 hergestellt ist, auf dem auf den beiden voneinander abgewendeten Stirnkanten 18 bzw. Oberflächen die Tragelemente 10, 11 angeordnet sind, über die der Stützkörper 4 mit zusätzlichen Decklagen 9 bzw. 12 angeformt sein kann. Die Tragelemente 10, 11 bestehen jeweils aus dem Tragkörper 6, der wiederum als Netz, Gewirke, Gewebe, Gitter, Fäden, Fasern oder Vlies oder ähnlichem aus den bereits zuvor beschriebenen Materialien gebildet sein kann, welches in der Schichte 7 aus thermoplastischem Kunststoff 8 eingebettet ist.

Wie dieser Darstellung in Fig. 2 weiters zu entnehmen ist, ist an einer Oberfläche 21 des Bauelementes 1 eine Oberflächenstruktur 22 dargestellt, wobei eine räumliche Ausbuchtung 23, durch die Versetzung eines Oberflächenteils 24 gegenüber einem diesen benachbarten Oberflächenteil 25 um eine Höhe 26 gebildet ist. Durch das benachbarte Versetzen der Oberflächenteile 24, 25 kann eine Struktur an der Oberfläche 21 des Bauelementes 1 erzeugt werden, d.h. daß beispielsweise eine Oberflächenstruktur 22 in Form von Sechsecken, Kreisen, Quadraten usw. hergestellt werden kann. Dadurch wird ein den Stirnkanten 18 zugewandter Endbereich der Stege 14 bzw. die Stege 14 in parallel zur Symmetrieachse 17 verlaufender Richtung auf ein gegenüber dem Streckmaß geringeres Ausmaß gestaucht.

Eine solche Ausbildung des Bauelementes 1 wird dadurch ermöglicht, daß die Verformung des Stützkörpers 4 sowie der beiden Tragelemente 10, 11 dann erfolgt, während der thermoplastische Kunststoff 8 der Schichte 7 mit dem Stützkörper 4 verbunden wird, worauf die Oberflächenstruktur 22 des Bauelementes 1 durch entsprechenden Druck auf die Deckschichten 2, 3 hergestellt wird und dieser solange aufrechterhalten bleibt, bis die Schichte 7 aus thermoplastischem Kunststoff 8 soweit abgekühlt ist, daß sie eine Eigenstabilität aufweist. Durch die Ausübung unterschiedlicher Drücke auf die Deckschichte 2, 3 wird nunmehr erreicht, daß die Stirnkanten 18 der Stege 14 in deren Endbereichen 27 unterschiedlich gestaucht bzw. verformt werden, sodaß an der Oberfläche 21 des Bauelementes 1 eine gewischte Oberflächenstruktur 22 hergestellt wird, wobei jedoch eine kraft- bzw. formschlüssige Verbindung der Stirnkanten 18 mit den Fläche 19, 20 der Deckschichten 2, 3 erreicht wird.

Durch diese Art des Aufbaus der Bauelemente 1 bzw. deren Herstellungsverfahren ist es daher möglich, Bauelemente 1 mit den unterschiedlichsten Oberflächenstrukturen 22 herzustellen, ohne dabei das Raumgewicht des Bauelementes 1 zu verändern.

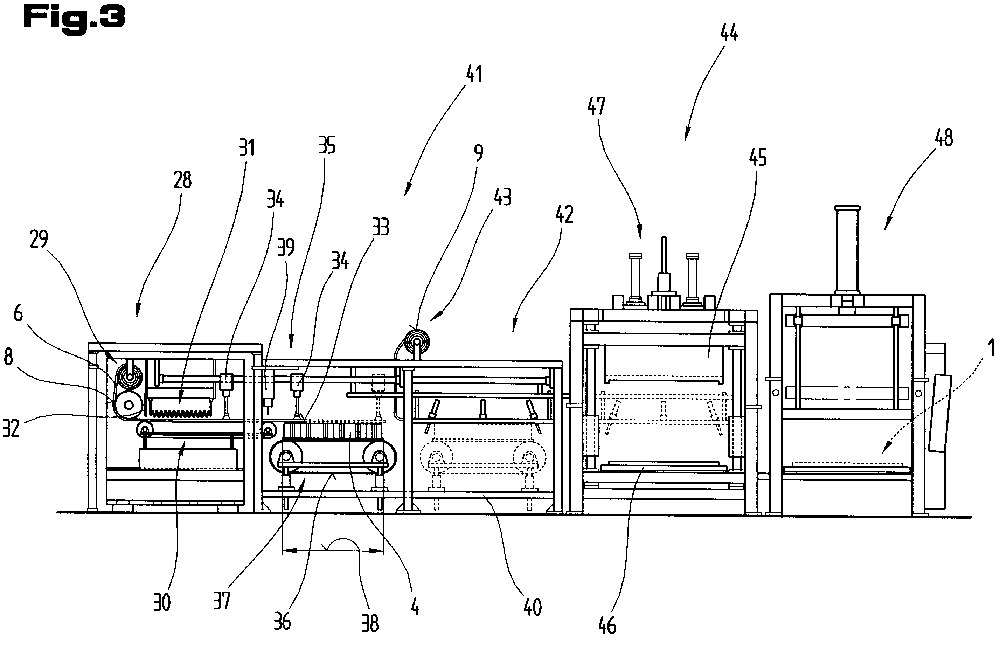

In Fig. 3 ist eine Vorrichtung zum Herstellen eines Bauelementes 1 in vereinfachter, schematischer Darstellung gezeigt.

Die Herstellung des Bauelementes 1, beispielsweise in einer dargestellten Taktstraße, erfolgt nun derart, daß in einer ersten Arbeitsstation 28 von einer Rolle 29 der Tragkörper 6 abgerollt und auf einem umlaufenden Bandförderer 30, beispielsweise mit einem Teflonband oder einem mit einem Gleitmittel beschichteten Band, aufgelegt wird. Bevorzugt ist der Tragkörper 6 mit einem pastenförmigen und/oder pulverförmigen thermoplastischen Kunststoff 8 beschichtet. Es ist aber auch möglich, daß unmittelbar vor einer Heizvorrichtung 31 der thermoplastische Kunststoff 8 in flüssiger oder pastenförmiger Form über eine Auftragsvorrichtung 32 aufgebracht wird. Es ist aber auch möglich, ein Vlies aus aufschmelzbaren Fäden bzw. Fasern mit dem darin eingebetteten Tragkörper 6 zu verwenden. Im Durchlauf durch die Heizvorrichtung 31 wird der thermoplastische Kunststoff 8 soweit erweicht, daß er seine vollen Hafteigenschaften aufweist und zumindest elastoplastisch verdrängbar ist, d.h. er weist eine plastische bzw. flüssige oder teigige Konsistenz auf. Dadurch kann je nach der gewählten Temperatur für den Erweichungsprozeß des Kunststoffes ein unterschiedlich langer Anformvorgang erzielt werden. Je niedriger die Temperaturen desto länger und je höher die Temperatur desto kürzer ist der Anformvorgang. Dabei sind Temperaturen zwischen 80°C und 250°C möglich, welche von der Art des gewählten Kunststoffes sowie vom herzustellenden Bauteil abhängen. Je nach gewählter Verarbeitungstemperatur ergeben sich Prozeßzeiten zwischen 10 sec. und 5 min. für den Anformvorgang. Die entsprechende Abkühlzeit ist daran anschließend ebenfalls wiederum von der Verarbeitungstemperatur abhängig.

Ein Anfang 33 des Tragkörpers 6 wird durch einen Greifer 34 einer Handlingvorrichtung 35 erfaßt und über ein Transportband 36 zu einer weiteren Fördervorrichtung 37 vorgezogen. Dazu kann z.B. mit einem weiteren Greifer 34 der Tragkörper 6 erfaßt werden. In einem Schneidvorgang wird in einer gewünschten Länge 38 des Bauelementes 1 mittels einer Schneidvorrichtung 39 der Tragkörper 6 durchtrennt und mit den beiden Greifern 34 als Tragelement 11 z.B. direkt auf das Transportband 36 der Fördervorrichtung 37 aufgelegt.

Anschließend wird mit einer weiteren Handlingvorrichtung 35, die im Detail nicht dargestellt ist, bzw. können hierzu auch die gleichen Greifer 34 verwendet werden, der Stützkörper 4 auf dem Tragelement 11 aufgelegt und danach wie in zuvor beschriebener Weise, auf die Oberseite des Stützkörpers 4 wiederum ein Tragkörper 6 aufgebracht werden. Entsprechend den verschiedenen in den Fig. 1 und 2 beschriebenen Ausführungsvarianten ist es weiters selbstverständlich auch noch möglich, daß auf eine oder beide Oberflächen der Tragkörper 6 eine Decklage 9 bzw. 12 aufgebracht wird. Dabei erfolgt z.B. das Auflegen der Decklage 12 vor dem Auflegen des Tragelementes 11 und die Decklage 9 nach dem Aufbringen des Tragelementes 10 auf dem Stützkörper 4.

Danach kann die Fördervorrichtung 37 z.B. entlang einer Führungsbahn 40 aus einer Auflegestation 41 in eine Vorpreßstation 42 bzw. in eine Auflegestation für die Decklage 9 bzw. 12 transportiert werden. Es kann nämlich z.B. in dieser Vorpreßstation 42 die von einer Rolle 43 abgewickelte Decklage 9 auf den Tragkörper 6 aufgelegt und durch entsprechenden Druck grob positioniert und zum Anhaften an diesem gebracht werden. Danach wird das vorgefertigte Halbzeug in eine Preßvorrichtung 44 eingelegt.

Durch das Schließen bzw. Aufsetzen eines Formoberteils 45 auf einen Formunterteil 46 mittels Preßantrieben 47 kann das Bauelement 1, in die in schematisch in vollen Linien gezeichnete Form geformt werden, wobei das Bauelement 1 solange zwischen dem Formoberteil 45 und dem Formunterteil 46 gehalten wird, bis der thermoplastische Kunststoff 8 der Schichte 7, in die der Tragkörper 6 eingebettet ist, soweit erstarrt oder abgekühlt ist, daß die Formsteifigkeit ausreicht, den Stützkörper 4 bzw. die darin enthaltene Wabenanordnung 5 aus der Preßvorrichtung 44 zu entfernen. Dieser Temperaturbereich, bis zu welchem das Bauelement 1 in der Preßvorrichtung 44 gehalten werden muß, ist jeweils vom verwendeten Kunststoff 8 abhängig bzw. auch von den durch die Verformung des Stützkörpers 4 entstehenden, diesem innewohnenden Rückstellkräften, sodaß die gewünschte Form bzw. Oberflächenstruktur dann auch nach dem vollständigen Erkalten des Bauelementes 1 beibehalten werden kann. Um die in die Form eingelegten Einzelteile besser positionieren bzw. halten zu können, kann zumindest eine der beiden Formhälften mit Haltevorrichtungen, insbesondere Vakuumschlitzen zur Aufnahme und Halterung einer Deckschichte ausgebildet sein.

Dieser Preßvorrichtung 44 kann eine Stanzstation 48 nachgeordnet sein, in der dann das vorgefertigte Bauelement 1 - wie mit strichlierten Linien angedeutet - eingelegt und an seinem Umfang in die gewünschte endgültige Form mit der Oberflächenstruktur beschnitten und gegebenenfalls - das ebenfalls im Rahmen der Erfindung möglich ist - durch einen zusätzlichen thermischen Umformvorgang in die gewünschte Endraumform verbracht wird.

Im Zuge der Herstellung des Bauelementes 1 ist es selbstverständlich auch möglich, daß z.B. in der Auflegestation 41 oder in der Vorpreßstation 42 zwischen dem Stützkörper 4 bzw. dem Tragelement 11 und/oder der Decklage 9 bzw. 12 ein Verstärkungselement positioniert und eingelegt werden kann. Selbstverständlich ist es auch möglich, das Tragelement 10 bzw. 11 aus mehreren als den beschriebenen Schichten herzustellen, um über den Tragkörper 6 unter Anbindung mit dem Kunststoff 8 der Schichte 7 eine weitere Folie einzulegen, um die gewünschten Festigungseigenschaften an der Formoberfläche des Bauelementes 1 zu erreichen.

Selbstverständlich handelt es sich bei der beschriebenen Vorrichtung und dem in Verbindung mit der Vorrichtung beschriebenen Verfahren um eine der möglichen Ausführungs- und Anordnungsvarianten, und es kann sowohl die Vorrichtung als auch das Verfahren dem Fachmann im Rahmen des Standes der Technik geläufigen Fachwissens beliebig abgeändert werden, solange die gewünschten Eigenschaften des Bauelementes 1 bei der Herstellung erreicht werden können. So ist es möglich, sowohl einen kontinuierlichen und/oder diskontinuierlichen Verfahrensablauf zu wählen.

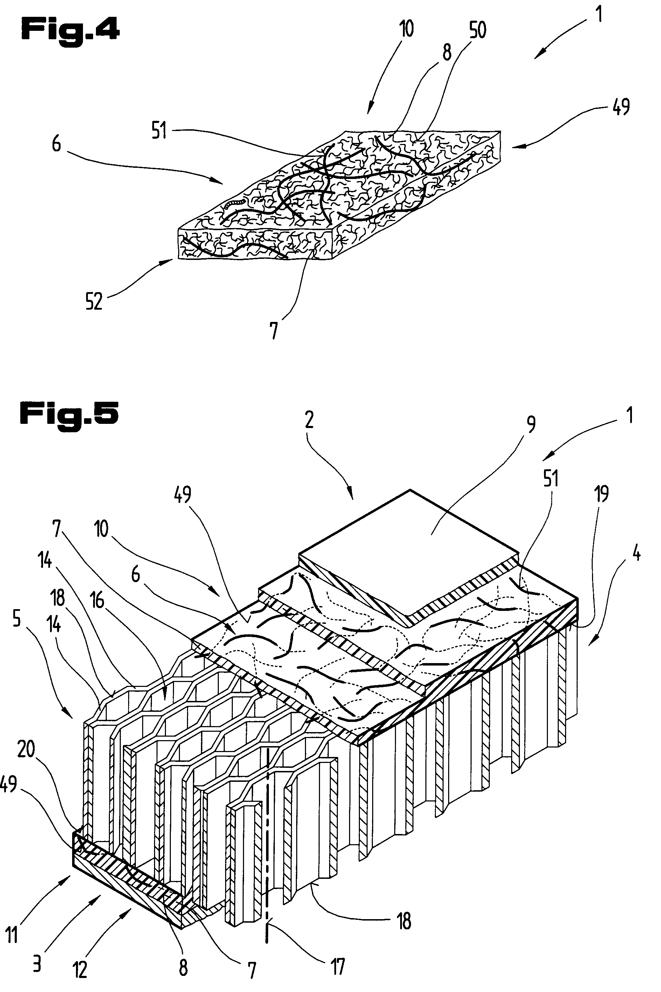

In den Fig. 4 und 5 sind weitere Ausführungsformen für das mehrlagige Bauelement 1 gezeigt, wobei soweit wie möglich für gleichartige Teile gleiche Bezugszeichen verwendet wurden.

So ist in Fig. 4 eine andere Ausbildung für das Tragelement 10 vor seiner Verbindung mit dem Stützkörper 4 gezeigt, wobei das Tragelement 10 in dieser Zustandsform als Vlies 49 ausgebildet ist. Dieses Vlies 49 besteht einerseits aus einer Wirrlage aus einzelnen Fäden 50, welche bevorzugt aus dem thermoplastischen Kunststoff 8, wie z.B. Polypropylen, Polyethylen, Polyamid, Polystyrol, ABS, Polyvinylchlorid, Polyimid, Aramid, Polyester gebildet sind und andererseits aus länger ausgebildeten Einlagefäden 51, welche den Tragkörper 6 ausbilden. Die Wahl des Werkstoffes der Fäden 50 und der Einlagefäden 51 ist von den gewünschten Einsatzbedingungen abhängig und können beliebig gewählt bzw. untereinander verschiedenst miteinander kombiniert werden. Die Fäden 50 bilden ihrerseits eine eigene Faserlage 52 aus, in welche bei deren Herstellungsvorgang die einzelnen Einlagefäden 51 des Tragkörpers 6 lose in diese eingebracht werden. Dadurch erreicht man in seinem Gesamtaufbau das einfach herzustellende Vlies 49, welches in seinen Dimensionen jeweils einfach an die gewünschten Einsatzbedingungen angepaßt werden kann. Das Mischungsverhältnis der Fäden 50 zu den Einlagefäden 51 kann z.B. 70 % zu 30 % betragen. Weiters ist bei einem einzelnen Faden 50 gezeigt, daß dieser wiederum aus einzelnen Fasern bzw. Fäden gebildet sein kann. Das gleiche trifft auch für die Ausbildung des Einlagefadens 51 zu.

Selbstverständlich ist es aber auch möglich, die Fäden 50 für die Faserlage 52 aus Polyamiden herzustellen. Für die Fäden 50 der Faserlage 52 empfiehlt es sich weiters, vor allem wenn sie aus Polypropylen oder Aramid oder Polyamid bestehen, daß sie einen Titer, also ein Gewichts-/Längenverhältnis von 2 dtex bis 8 dtex, bevorzugt 3,5 dtex, aufweisen. Nachdem die Faserlage 52 dadurch hergestellt wird, daß die einzelnen Fasern bzw. Fäden 50 nur durch Nadeln bzw. Verfilzen und in einigen bestimmten Fällen durch thermische Bindung, also durch gleichzeitige Einwirkung von Druck und Temperatur aneinander haften, bzw. in der die Faserlage 52 bildenden lockeren Matte halten, ist es, um z.B. dann wenn eine hohe Zug- und Reißfestigkeit, vor allem bei geringem Raumgewicht eines derartigen Vlieses 49 erreicht werden soll, vorteilhaft, die richtige Länge der Fasern bzw. Fäden 50 für die Herstellung der Faserlage 52 zu verwenden. Dabei hat sich vor allem eine Länge der Fäden 50 bis 100 mm, bevorzugt zwischen 40 mm und 60 mm, als vorteilhaft erwiesen.

Es ist dabei weiters zu berücksichtigen, daß bei der Herstellung dieses Vlieses 49 bzw. der Faserlage 52 die Fasern bzw. Fäden 50 und/oder Einlagefäden 51, z.B. aus Baumwolle, Schafwolle, Flachs oder auch aus Polyamid, Polyester, PVC, PP, PE oder Nylon, bzw. Aramiden oder dgl., als loses Schüttgut, beispielsweise auf eine als Transportband dienende Trägerlage, aufgebracht werden. Während der Vorwärtsbewegung des Schüttgutes auf dieser Trägerlage wird diese Wirrlage aus Fasern bzw. Fäden 50 und/oder Einlagefäden 51 mittels meist hakenförmiger Nadeln vernadelt bzw. verfilzt, um so einen zusammenhängenden, in sich verbundenen Körper zu bilden. Diese Verbindung ist unabhängig davon, ob die Trägerlage mit der Faserlage über die Fasern bzw. Fäden 50 und/oder Einlagefäden 51 verbunden wird, oder ob das Trägerband ein endlos umlaufender Maschinenteil ist. Auch hier sei erwähnt, daß je nach Einsatzbedingung eine beliebige Kombination des Werkstoffes bzw. der Länge der Fäden 50 und/oder Einlagefäden 51 gewählt werden kann.

Bei einer derartigen vorbeschriebenen Vorgangsweise ist es dann möglich, Raumgewichte der Faserlage 52 bzw. des Vlieses 49 zwischen 10 kg/m³ und 80 kg/m³ zu verwenden. Dadurch kann ein Quadratmetergewicht der Faserlage 52 des Vlieses 49, z.B. bei einer Dicke von zirka 5 mm, zwischen 60 g/m² und 390 g/m², bevorzugt 70 g/m², aufweisen.

Weiters kann es vorteilhaft sein, wenn die Fasern bzw. Fäden 50 und/oder Einlagefäden 51 der Faserlage 52 bzw. des Vlieses 49 vor der Verbindung mit dem Stützkörper 4 des Bauelementes 1, beispielsweise durch thermische Crackung bzw. thermische Bindung, verfestigt werden, weil dadurch ein besserer Zusammenhalt der einzelnen Fasern bzw. Fäden 50 und Einlagefäden 51 erreicht wird. Dabei ist es von Vorteil, wenn die einzelnen Fasern bzw. Fäden 50 und Einlagefäden 51 aus Thermoplasten bestehen. Vor allem Thermoplaste weisen am ehesten einen Plastifizierungs- bzw. Erweichungspunkt zwischen 80°C und 250°C, bevorzugt zwischen 100°C und 180°C, auf, die eine thermische Verbindung der einzelnen Fasern bzw. Fäden 50 und Einlagefäden 51 oder eine thermische Verfestigung des gesamten Vlieses 49 begünstigen. Erst bei der vollständigen Aufweichung bzw. Plastifizierung der Fäden 50 beim Anformvorgang an den Stützkörper 4 werden die Einlagefäden 51 in den flüssigen Kunststoff 8 eingebettet und bilden somit nach dem Erkalten des Kunststoffes 8 den Tragkörper 6 aus. Vorteilhaft ist es weiters, wenn eine Haftung des thermoplastischen Kunststoffes 8 gering ist und z.B. zwischen 5 N/5cm und 30 N/5cm beträgt.

Als weiters vorteilhaft hat sich erwiesen, wenn die Einlagefäden 51 des Tragkörpers 6 als sogenannte Langfäden bzw. langfaserige Einlagefäden 51 ausgebildet sind, welche eine Länge bis 100 mm, bevorzugt zwischen 20 mm und 80 mm, aufweisen. Diese einzelnen Einlagefäden 51 können aus den verschiedensten Werkstoffen, wie z.B. aus Glas und/oder Kunststoff und/oder Metall und/oder Keramik und/oder Graphit und/oder Naturfasern und/oder Kevlar gebildet sein, welche je nach Anwendungsfall untereinander auch beliebig miteinander kombiniert werden können. Diese werden dann bei der thermischen Behandlung des Vlieses 49 in den aus den einzelnen Fäden 50 gebildeten Kunststoff 8 der Schichte 7 miteingebettet und von dieser zumindest bereichsweise umschlossen, wodurch sich das Tragelement 10 ausbildet. Während dieses thermischen Verbindungsvorganges werden die einzelnen losen Einlagefäden 51 des Tragkörpers 6 kraft- und/oder formschlüssig mit der aus dem Kunststoff 8 gebildeten Schichte 7 verbunden.

In der Fig. 5 ist nun das Bauelement 1 gezeigt, bei welchem sowohl das Tragelement 10 als auch das Tragelement 11 durch das in Fig. 4 beschriebene Vlies 49 gebildet ist. Das mehrlagige Bauelernent 1 weist wiederum zumindest eine der beiden Deckschichten 2 und 3 auf, wovon in diesem Ausführungsbeispiel beide gezeigt sind, zwischen welchen der Stützkörper 4 angeordnet ist.

Der Stützkörper 4 wird wiederum aus der Wabenanordnung 5 gebildet, welche aus Papier, Karton, Aluminium oder Kunststoff, gegebenenfalls mit Kaschierungen aus unterschiedlichen Materialien gebildet sein kann.

Die beiden Deckschichten 2, 3 des Bauelementes 1 werden bei diesem Ausführungsbeispiel durch das hier bereits thermisch behandelte Vlies 49 gebildet, welches eine kraft- und/oder formschlüssige Verbindung zwischen dem Stützkörper 4 und der Decklage 9 bildet.

Es ist aber selbstverständlich auch möglich, den Tragkörper 6 aus Natur- und/oder Kunstmaterialien, z.B. aus einem Netz, Gewirke, Gewebe, Geflecht, Gitter oder Vlies aus Fasern bzw. Fäden aus Glas, Metall, Kevlar, Graphit oder Textil, auszubilden, die in die Schichte 7 aus dem thermoplastischen Kunststoff 8 eingebettet sind, und welche bei der thermischen Behandlung an den Stützkörper 4 angeformt werden.

Wie weiters im Bereich der Deckschichte 2 schematisch angedeutet ist, ist es auch möglich, über die Schichte 7 aus dem thermoplastischen Kunststoff 8, wie z.B. Polypropylen, Polyurethan, gleichzeitig auch die Decklage 9, z.B. einen Stoff, ein Gewirke, Gewebe, einen Teppich oder ein Vlies anzuformen. Als Decklage 9 können wiederum die verschiedensten Werkstoffe Verwendung finden. Diese sind entsprechend des Anwendungsgebietes des mehrlagigen Bauelements 1 auszuwählen.

Ein besonderer Vorteil eines derart ausgebildeten Bauelements 1 liegt aber vor allem darin, daß zumindest eine harte, widerstandsfähige Deckschichte 2 bzw. dessen Tragelement 10 und gegebenenfalls die Decklage 9 von der weiteren Deckschichte 3 bzw. deren Tragelement 11 oder der eigenen Decklage 12 elastisch gedämpft und eine gewisse Eigensteifigkeit mit einem geringen Raumgewicht aufweist. Damit können diese beiden Deckschichten 2, 3 unabhängig voneinander schwingen, und es kann dadurch eine gute Schalldämmung erreicht werden, wie sie vor allem im Kraftfahrzeugwesen bzw. bei Raumtrennwänden oder dgl. mit besonderem Vorteil bzw. für die Körperschalldämmung einsetzbar ist.

Der Vorteil liegt vor allem darin, daß dadurch die widerstandsfähigen Deckschichten 2, 3 unter Verwendung der mit dem Tragkörper 6 verstärkten Schichte 7 aus thermoplastischem Kunststoff 8 eine hohe Oberflächen- und/oder Kantendruckfestigkeit erreicht wird und andererseits das Gesamtgewicht derartiger Bauelemente 1 durch das geringe Raumgewicht des Stützkörpers 4 gering gehalten werden kann.

Für die Herstellung des Bauelementes 1 können verschiedene Herstellungsschritte gewählt werden. So ist es z.B. möglich, einerseits Fertigteile und andererseits Halbfertigteile herzustellen. Bei der Herstellung der Fertigteile wird in einem durchlaufenden Arbeitsgang am Stützkörper 4 zumindest eine Deckschichte 2, 3 mit den zugehörigen Decklagen 9, 12 angeformt. Dabei erreicht man eine innige Verbindung zwischen den Oberflächen also den Stirnkanten 18 des Stützkörpers 4 und den einzelnen Decklagen 9, 12 über die Tragelemente 10, 11.

Weiters ist es aber auch möglich, einen sogenannten Halbfertigteil herzustellen, welcher lediglich aus dem Stützkörper 4 und zumindest an einer Oberfläche des Stützkörpers 4 angeordneten Tragelement 10, 11 gebildet ist. Dieser Halbfertigteil kann als bahnförmiges Element bzw. Platte ausgebildet sein. Der Halbfertigteil kann dann für die weitere Verwendung, beispielsweise in einer Heizstation, erwärmt werden, sodaß der Kunststoff 8 der Tragelemente 10, 11 erweicht bzw. verflüssigt wird, jedoch zumindest soweit erhitzt wird, daß er an seiner Oberfläche klebrig wird. Diese Erwärmung kann vor dem Auflegen einer Decklage 9, 12 auf zumindest einer Oberfläche des Tragelementes 10, 11 oder nach dem Auflegen dieser Decklage 9, 12 erfolgen.

Während der Erwärmung dieses Halbfertigteils ist darauf zu achten, daß während der Erwärmung der Halbfertigteil mit oder ohne der bereits eingelegten Decklage 9, 12 entsprechend der vorgefertigten Raumform oder bzw. in dieser vorgefertigten Form eingespannt wird, bzw. eine Ausdehnung über die vorgefertigten Abmessungen hinaus durch Aufbau eines entsprechenden Gegendruckes verhindert wird. Dies ist deshalb möglich, da beim erneuten Erwärmen des Halbfertigteils in den Hohlräumen 16 der Wabenanordnung 5 des Halbfertigteils eine Ausdehnung der Luft stattfindet, die versucht, das Halbfertigteil aufzublasen, wenn die Luft aufgrund der geschlossenen Zellen oder durch die beiden Tragelemente 10, 11 nicht nach außen durchtreten kann. Um also eine Formstabilität während des Erwärmens sicherzustellen, ist ein Festhalten der Halbfertigteile in der gewünschten Raumform notwendig.

Somit ist es auf einfache Art und Weise möglich, sowohl Bauelemente 1 als Fertigprodukt bzw. Fertigteil herzustellen und andererseits auf Vorrat Halbfertigteile bzw. Halbfertigprodukte herzustellen, welche je nach Kundenwunsch anschließend mit der gewünschten Decklage 9 bzw. 12 beschichtet werden können.

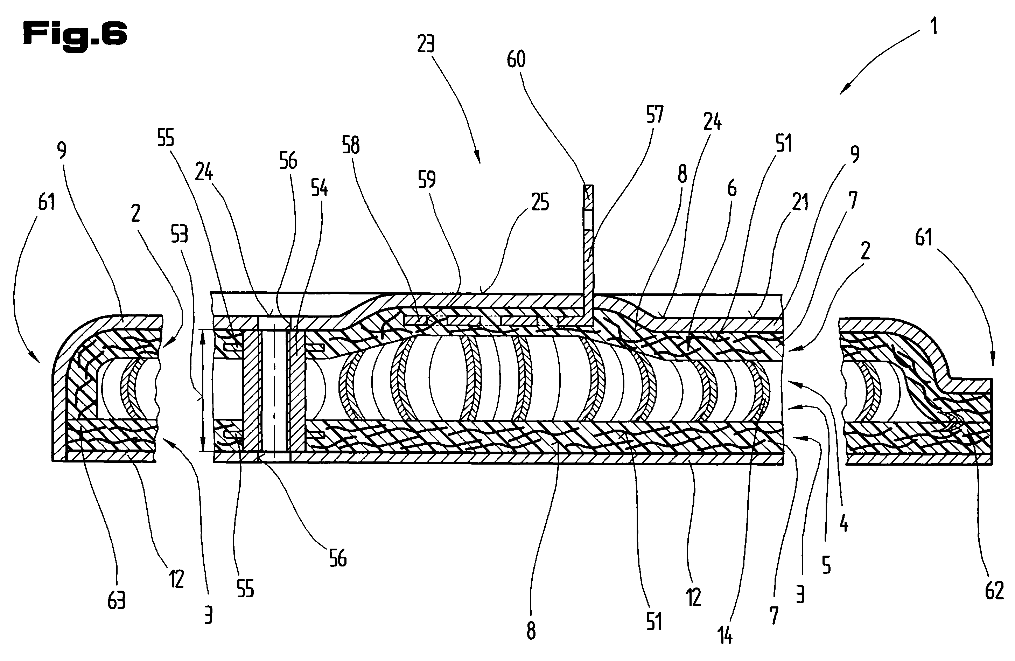

In der Fig. 6 ist das Bauelement 1 in einer gegebenenfalls für sich eigenständigen, erfindungsgemäßen Ausbildung gezeigt, wobei für gleiche Teile gleiche Bezugszeichen wie in den Fig. 1 bis 5 verwendet werden. Das Bauelement 1 ist dabei ähnlich aufgebaut wie das Bauelement in der Fig. 5 und ist aus dem Stützkörper 4, welcher die Wabenanordnung 5 ausbildet, den beidseits am Stützkörper 4 angeformten Deckschichten 2, 3 sowie gegebenenfalls den Decklagen 9, 12 gebildet. Die beiden Deckschichten 2, 3 bestehen aus dem die Schichte 7 bildenden Kunststoff 8, in welchem die zuvor beschriebenen Einlagefäden 51 eingebettet sind, welche den Tragkörper 6 ausbilden.

Bei diesem Ausführungsbeispiel ist wiederum die Oberfläche 21 im Bereich der Decklage 9 aus zueinander der Höhe nach versetzten Oberflächenteilen 24, 25 gebildet, wobei im linken Teil des Bauelements 1 im Oberflächenteil 24, ein sich zwischen der Decklage 9 bzw. 12 über eine verdichtete Stärke 53 erstreckender Einlageteil 54, wie beispielsweise eine Mutter, eingebracht ist. Der Einlageteil 54 weist zusätzlich noch im Bereich der Deckschichten 2, 3 schematisch angedeutete Halteelemente 55 auf, welche zur stabilen Halterung des Einlageteils 54 im Bauelement 1 dienen. Diese sollen den Einlageteil 54 gegen ein ungewolltes Herausziehen aus dem Bauelement 1 bzw. eine ungewollte Verdrehung in demselben sichern, wofür die einzelnen Halteelemente 55 im Bereich der Deckschichten 2, 3 angeordnet sind und von dem die Schichte 7 bildenden Kunststoff 8 sicher fixiert werden. Um ein entsprechendes Befestigungselement in den Einlageteil 54 eindrehen zu können, ist beispielsweise in der Decklage 9 und/oder der Decklage 12 eine Ausnehmung 56 vorgesehen, welche von dem nicht näher dargestellten Befestigungs- bzw. Halteelement durchsetzt ist.

Um den Einlageteil 54 im Bauelement 1 während dessen Herstellung einsetzen bzw. fixieren zu können, ist es möglich in jenem Bereich, in welchem der Einlageteil 54 angeordnet werden soll, beispielsweise die Stege 14 der Wabenanordnung 5 bereichsweise zu entfernen bzw. soweit entsprechend zu verformen, daß ein ungehindertes Durchragen des Einlageteils 54 durch die Wabenanordnung 5 möglich ist.

Im Bereich des Oberflächenteils 25, welcher bei diesem Ausführungsbeispiel geringer gegenüber dem Oberflächenteil 24 in Richtung der Stärke des Bauelements 1 verformt wurde, ist eine Art Ausbuchtung 23 darstellt. Dabei ist in der Schichte 7 aus dem Kunststoff 8 ein weiterer Einlageteil 57 in Form eines abgewinkelten Profils gezeigt, bei welchem ein Schenkel 58 vollständig von dem Kunststoff 8 der Deckschichte 2 umschlossen bzw. in diesem eingebettet ist. Um eine noch bessere Fixierung bzw. Halterung des Schenkels 58 in der Deckschichte 2 zu erreichen, kann der Schenkel 58 zusätzliche Durchbrüche 59 aufweisen, welche ebenfalls von dem Kunststoff 8 der Schichte 7 durchsetzt sind. Dadurch erreicht man eine gute kraft- und/oder formschlüssige Fixierung des Schenkels 58 in der Deckschichte 2.

Ein weiterer Schenkel 60 des Einlageteils 57 ragt dabei über die Oberfläche 21 des Bauelements 1 vor und dient beispielsweise zur Halterung bzw. Fixierung des gesamten Bauelements 1 an einem weiteren, nicht näher dargestellten Bauteil bzw. Gerüststeher. Selbstverständlich können die Einlageteile 54, 57 über die gezeigten Ausführungsbeispiele hin variiert und je nach Anwendungsfall zueinander unterschiedlich ausgeführt werden. Die hier gezeigte Anordnung ist nur beispielhaft wiedergegeben, wobei es möglich ist, die Einlageteile 54, 57 auch in der Deckschichte 3 bzw. auch über die volle Stärke des Bauelements 1 durchgehend anzuordnen. Wesentlich ist dabei, daß ein gewisser Anteil des Einlageteils 54, 57 in einer der Deckschichten 2, 3 angeordnet ist, um so eine ausreichend stabile Fixierung bzw. Halterung im Bauelement 1 zu erreichen. Bei der Verwendung eines netz- bzw. gitterförmigen Tragkörpers 6 als Tragelement 10, 11, kann es sich als vorteilhaft erweisen, die Einlageteile 54, 57 entweder zwischen dem Tragkörper 6 und einer der Decklagen 9, 12 und/oder zwischen dem Tragkörper 6 und dem Stützkörper 4 anzuordnen. Dies hängt wiederum von der gewünschten Befestigungsart bzw. dem gewählten Einlageteil 54, 57 ab und ist frei wählbar.

Selbstverständlich ist es auch möglich, als Einlageteile 54, 57 alle denkbaren Bauteile wie beispielsweise Platten, Winkel, Drehteile, Gewindebuchsen, Achsen für Klappen oder dgl. einzeln bzw. untereinander beliebig zu kombinieren, wobei auch die unterschiedlichsten Materialien dafür wie beispielsweise Stahl, Aluminium, Kunststoff, Holz oder dgl. verwendet werden können.

Wie weiters aus der Darstellung im rechten Bereich der Fig. 6 zu ersehen ist, ist ein bevorzugt rundum durchlaufender Stirnrandbereich 61 des Bauelementes 1, insbesondere die beiden Deckschichten 2, 3 sowie gegebenenfalls zumindest eine der beiden Decklagen 9, 12 in einem Verbindungsbereich 62 miteinander verbunden. Dabei sind die beiden Deckschichten 2, 3 sowie gegebenenfalls zumindest eine der Decklagen 9, 12 im Verbindungsbereich 62 einander überlappend angeordnet, wobei zusätzlich noch schematisch angedeutet ist, daß bei dem Verbindungsvorgang der beiden Deckschichten 2, 3 die zwischen diesen angeordnete Wabenanordnung 5, insbesondere deren Stege 14, stark räumlich verformt sowie in den die Schichte 7 ausbildenden Kunststoff 8 eingebettet ist. Dabei kann sich der Verbindungsbereich 62 zwischen den beiden Deckschichten 2, 3 bevorzugt durchgängig über den gesamten umlaufenden Stirnrandbereich 61 des Bauelementes 1 erstrecken. Selbstverständlich ist auch eine Anordnung der Einlegeteile 54, 57 im Stirnrandbereich 61 des Bauelementes 1 möglich.

Im linken Teil der Darstellung in der Fig. 6 ist eine andere mögliche Ausbildungsform des Stirnrandbereiches 61 dargestellt, bei welcher beispielsweise die beiden Deckschichten 2, 3 sowie gegebenenfalls zumindest eine der Decklagen 9, 12 den umlaufenden Stirnrandbereich 61 des Bauelementes 1 ausbilden. Dabei ist die Deckschichte 2 in Richtung der Deckschichte 3 abgewinkelt ausgebildet und in einem weiteren Verbindungsbereich 63 miteinander verbunden. Damit ist wiederum gewährleistet, daß die Wagenanordnung 5 zwischen den beiden Deckschichten 2, 3 sowohl an den beiden voneinander distanzierten Stirnkanten 18 der Stege 14 als auch im umlaufenden Stirnrandbereich 61 vollständig von diesem umschlossen ist. Dadurch ergeben sich beispielsweise festigkeitsmäßige Vorteile, da die beiden relativ starr bzw. steif ausgebildeten Deckschichten 2, 3 nicht gegeneinander bei einer Krafteinwirkung verschoben werden können.

Lediglich der Ordnung halber sei abschließend erwähnt, daß einzelne Teile der Vorrichtungen bzw. des Bauelementes 1 und dessen Schichten maßstäblich stark übertrieben oder unproportional dargestellt wurden, um das Verständnis der Erfindung zu erleichtern. Gleiches gilt für die gewählten Dicken-, Breiten- und Längenverhältnisse der einzelnen Schichten, insbesondere des Tragkörpers 6 und der Schichten aus dem thermoplastischen Kunststoff 8.

Es kann auch jedes einzelne der Ausführungsbeispiele eine für sich eigenständige, erfindungsgemäße Lösung darstellen. Gleichermaßen können auch einzelne bzw. beliebige Kombinationen der Ansprüche eigenständige, erfindungsgemäße Lösungen bilden, ebenso wie Einzelmerkmale der Ausführungsbeispiele gegebenenfalls in beliebiger Kombination aus verschiedenen Ausführungsbeispielen.

Vor allem können die einzelnen in den Fig. 1; 2; 3; 4; 5; 6 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Bauelement
- 2: Deckschichte
- 3: Deckschichte
- 4: Stützkörper
- 5: Wabenanordnung
- 6: Tragkörper
- 7: Schichte
- 8: Kunststoff
- 9: Decklage
- 10: Tragelement
- 11: Tragelement
- 12: Decklage
- 13: Wabe
- 14: Steg
- 15: Dicke
- 16: Hohlraum
- 17: Symmetrieachse
- 18: Stirnkante
- 19: Fläche
- 20: Fläche
- 21: Oberfläche
- 22: Oberflächenstruktur
- 23: Ausbuchtung
- 24: Oberflächenteil
- 25: Oberflächenteil
- 26: Höhe
- 27: Endbereich
- 28: Arbeitsstation
- 29: Rolle
- 30: Bandförderer
- 31: Heizvorrichtung
- 32: Auftragsvorrichtung
- 33: Anfang
- 34: Greifer
- 35: Handlingvorrichtung
- 36: Transportband
- 37: Fördervorrichtung
- 38: Länge
- 39: Schneidvorrichtung
- 40: Führungsbahn
- 41: Auflegestation
- 42: Vorpreßstation
- 43: Rolle
- 44: Preßvorrichtung
- 45: Formoberteil
- 46: Formunterteil
- 47: Preßantrieb
- 48: Stanzstation
- 49: Vlies
- 50: Faden
- 51: Einlagefaden
- 52: Faserlage
- 53: Stärke
- 54: Einlageteil
- 55: Halteelement
- 56: Ausnehmung
- 57: Einlageteil
- 58: Schenkel
- 59: Durchbruch
- 60: Schenkel
- 61: Stirnrandbereich
- 62: Verbindungsbereich
- 63: Verbindungsbereich

## Patentansprüche

1. Mehrlagiges Bauelement, bestehend aus einem Stützkörper, der mit zumindest einer Deckschichte verbunden ist, wobei die Deckschichte aus einem Tragkörper mit Fasern bzw. Fäden gebildet ist und in einer Schichte aus thermoplastischem Kunststoff eingebettet ist, dadurch gekennzeichnet, daß der Stützkörper (4) durch eine Wabenanordnung (5) mit mehreren Hohlräumen (16), von welchen jeder von mehreren Stegen (14) umgrenzt und mit diesen von den unmittelbar benachbarten Hohlräumen (16) getrennt ist, gebildet ist und daß einander gegenüberliegende Stirnkanten (18) der Stege (14) in zwei voneinander distanzierten Ebenen angeordnet sind, und daß diese Hohlräume (16) im wesentlichen parallel zu einer senkrecht zu den Ebenen verlaufenden Symmetrieachse (17) ausgerichtet sind und die Deckschichten (2, 3) mit ihren einander zugewandten Flächen (19, 20) auf den Stirnkanten (18) angeformt und kraft- bzw. formschlüssig mit diesen verbunden sind.

2. Mehrlagiges Bauelement nach dem vorhergehenden Anspruch, dadurch gekennzeichnet, daß die Wabenanordnung (5) insbesondere aus Papier, Karton, Aluminium oder Kunststoff gebildet ist.

3. Mehrlagiges Bauelement nach einem oder mehreren der vorhergehenden Ansprüche, dadurch gekennzeichnet, daß ein den Stirnkanten (18) zugewandter Endbereich der Stege (14) bzw. die Stege (14) in parallel zur Symmetrieachse (17) verlaufenden Richtung auf ein gegenüber der dem Streckmaß geringeres Ausmaß gestaucht ist.

4. Mehrlagiges Bauelement nach einem oder mehreren der vorhergehenden Ansprüche, dadurch gekennzeichnet, daß die Stege (14) durch die Decklagen (2, 3) in einer gekrümmten Lage bezogen auf die Symmetrieachse (17) angeordnet sind.

5. Mehrlagiges Bauelement nach einem oder mehreren der vorhergehenden Ansprüche, dadurch gekennzeichnet, daß die einzelnen Stege (14) der einzelnen Waben (13) auf eine unterschiedliche Höhe (26) verformt sind.

6. Mehrlagiges Bauelement nach einem oder mehreren der vorhergehenden Ansprüche, dadurch gekennzeichnet, daß die Stege (14) der einzelnen Waben (13) in deren Berührungsbereich miteinander verbunden, insbesondere verklebt, sind.

7. Mehrlagiges Bauelement nach einem oder mehreren der vorhergehenden Ansprüche, dadurch gekennzeichnet, daß die Schichte (7) aus thermoplastischem Kunststoff (8) durch Polyäthylen, Polyamid, Polypropylen, Polystyrol, Polyvinylchlorid, Polyimid, ABS oder dgl. gebildet ist.

8. Mehrlagiges Bauelement nach einem oder mehreren der vorhergehenden Ansprüche, dadurch gekennzeichnet, daß der Tragkörper (6) durch ein Netz und/oder Gewirke und/oder Vlies aus verschiedenen Fasern bzw. Einlegefäden (51) aus Glas und/oder Metall und/oder Kevlar und/oder Graphit und/oder Textil und/oder Kunststoff und/oder Keramik und/oder Naturfasern und/oder Karbon gebildet ist.

9. Mehrlagiges Bauelement nach einem oder mehreren der vorhergehenden Ansprüche, dadurch gekennzeichnet, daß der Tragkörper (6) durch verschiedene Fasern bzw. Einlegefäden (51) aus Glas und/oder Metall und/oder Kevlar und/oder Graphit und/oder Textil und/oder Kunststoff und/oder Keramik und/oder Naturfasern und/oder Karbon gebildet ist.

10. Mehrlagiges Bauelement nach einem oder mehreren der vorhergehenden Ansprüche, dadurch gekennzeichnet, daß der Tragkörper (6) mit einem Granulat, z.B. einem Pulver oder einer Folie, des thermoplastischen Kunststoffes (8) in fester Konsistenz beschichtet bzw. gefüllt ist.

11. Mehrlagiges Bauelement nach einem oder mehreren der vorhergehenden Ansprüche, dadurch gekennzeichnet, daß der Tragkörper (6) mit einer Paste des thermoplastischen Kunststoffes (8) beschichtet ist, die bei Raumtemperatur nur gering haftend ist.

12. Mehrlagiges Bauelement nach einem oder mehreren der vorhergehenden Ansprüche, dadurch gekennzeichnet, daß der Tragkörper (6) aus Polyurethan gebildet ist.

13. Mehrlagiges Bauelement nach einem oder mehreren der vorhergehenden Ansprüche, dadurch gekennzeichnet, daß der thermoplastische Kunststoff (8) unter Druck und unter Temperatur zwischen 80°C und 180°C zumindest zähflüssig ist.

14. Mehrlagiges Bauelement nach einem oder mehreren der vorhergehenden Ansprüche, dadurch gekennzeichnet, daß der thermoplastische Kunststoff (8) bei einer Temperatur zwischen 150°C bis 250°C flüssig ist und/oder die Haftung sehr gering, z.B. zwischen 5 N/5cm und 30 N/5cm, ist.

15. Mehrlagiges Bauelement nach einem oder mehreren der vorhergehenden Ansprüche, dadurch gekennzeichnet, daß auf dem Tragkörper (6) eine Decklage (9; 12), insbesondere ein Stoff, Gewirke, Gewebe, Vlies, Teppich oder eine Folie aus Natur- und/oder Kunstmaterialien angeordnet ist und über die Schichte (7) aus thermoplastischem Kunststoff (8) an dem Tragkörper (6) angeformt ist bzw. anhaftet.

16. Mehrlagiges Bauelement nach einem oder mehreren der vorhergehenden Ansprüche, dadurch gekennzeichnet, daß zwischen dem Tragkörper (6) eines Tragelementes (10, 11) und einer Decklage (9, 12) ein Einlageteil (54, 57) angeordnet bzw. bevorzugt in die Schichte (7) des thermoplastischen Kunststoffes (8) eingebettet ist.

17. Mehrlagiges Bauelement nach einem oder mehreren der vorhergehenden Ansprüche, dadurch gekennzeichnet, daß das Tragelement (10, 11) als Vlies (49) ausgebildet ist.

18. Mehrlagiges Bauelement nach einem oder mehreren der vorhergehenden Ansprüche, dadurch gekennzeichnet, daß das Vlies (49) als Wirrlage aus Fäden (50) und/oder Einlagefäden (51) bzw. Fasern gebildet ist.

19. Mehrlagiges Bauelement nach einem oder mehreren der vorhergehenden Ansprüche, dadurch gekennzeichnet, daß die Fäden (50) aus Thermoplasten, insbesondere Polypropylen und/oder Polyamid und/oder Aramid und/oder Polyester und/oder PVC und/ oder ABS und/oder Polyimid und/oder Polystyrol, gebildet sind und eine Länge bis zu 100 mm, bevorzugt zwischen 40 mm und 60 mm, aufweisen.

20. Mehrlagiges Bauelement nach einem oder mehreren der vorhergehenden Ansprüche, dadurch gekennzeichnet, daß die Einlagefäden (51) bzw. Fasern in den Kunststoff (8) der Schichte (7) eingebettet sind und den Tragkörper (6) ausbilden sowie eine Länge bis 100 mm, bevorzugt zwischen 20 mm und 80 mm, aufweisen.

21. Mehrlagiges Bauelement nach einem oder mehreren der vorhergehenden Ansprüche, dadurch gekennzeichnet, daß die beiden Deckschichten (2, 3) sowie gegebenenfalls zumindest eine der Decklagen (9, 12) im umlaufenden Stirnrandbereich (61) des Bauelementes (1) in einem Verbindungsbereich (62) miteinander verbunden sind.

22. Mehrlagiges Bauelement nach einem oder mehreren der vorhergehenden Ansprüche, dadurch gekennzeichnet, daß sich der Verbindungsbereich (62, 63) bevorzugt durchgängig über den gesamten umlaufenden Stirnrandbereich (61) des Bauelementes (1) erstreckt.

23. Mehrlagiges Bauelement nach einem oder mehreren der vorhergehenden Ansprüche, dadurch gekennzeichnet, daß sich die beiden Deckschichten (2, 3) sowie gegebenenfalls zumindest eine der Decklagen (9, 12) im Verbindungsbereich (62) einander überlappen.

24. Mehrlagiges Bauelement nach einem oder mehreren der vorhergehenden Ansprüche, dadurch gekennzeichnet, daß die beiden Decksichten (2, 3) sowie gegebenenfalls zumindest eine der Decklagen (9, 12) im Verbindungsbereich (63) winkelig zueinander ausgerichtet sind.

25. Mehrlagiges Bauelement nach einem oder mehreren der vorhergehenden Ansprüche, dadurch gekennzeichnet, daß eine der beiden Deckschichten (2, 3) sowie gegebenenfalls zumindest eine der Decklagen (9, 12) den umlaufenden Stirnrandbereich (61) des Bauelementes (1) ausbilden.

26. Mehrlagiges Bauelement nach einem oder mehreren der vorhergehenden Ansprüche, dadurch gekennzeichnet, daß die Wabenanordnung (5), insbesondere deren Stege (14), im Verbindungsbereich (62, 63) räumlich verformt sowie in den die Schichte (7) ausbildenden Kunststoff (8) eingebettet ist.

27. Verfahren zur Herstellung eines mehrlagigen Bauelementes, bei dem an einem Stützkörper zumindest eine Deckschichte aufgebracht und unter Einwirkung von Druck und/oder Temperatur unter gegebenenfalls räumlicher Verformung die Deckschichte mit dem Stützkörper zu einem mehrlagigen Bauelement verbunden wird, dadurch gekennzeichnet, daß vor dem Auflegen der Deckschicht auf den Stützkörper auf die Deckschicht ein Granulat und/oder eine Folie und/oder eine Paste und/oder ein Vlies aus einem thermoplastischen Kunststoff auf einen faser- bzw. fadenförmigen Tragkörper derselben aufgebracht wird, daran anschließend die Deckschichte mit dem thermoplastischen Kunststoff zumindest soweit erwärmt wird, bis dieser zähflüssig ist, worauf die Deckschichte auf den Stützkörper aufgelegt und auf diesem zur Verbindung der Deckschichte mit dem Stützkörper aufgedrückt bzw. aufgepreßt und unmittelbar anschließend die Deckschichte abgekühlt wird und nach einer ausreichenden Erstarrung das Bauelement aus der Form entnommen wird.

28. Verfahren nach dem vorhergehenden Anspruch, dadurch gekennzeichnet, daß die Deckschichte und/oder der Stützkörper gleichzeitig mit dem Einpressen des thermoplastischen Kunststoffes räumlich verformt wird.

29. Verfahren nach einem oder mehreren der vorhergehenden Ansprüche, dadurch gekennzeichnet, daß das Bauelement vor bzw. während der räumlichen Verformung der Deckschichten und des Stützkörpers erwärmt wird.

30. Verfahren nach einem oder mehreren der vorhergehenden Ansprüche, dadurch gekennzeichnet, daß der thermoplastische Kunststoff auf eine Temperatur zwischen 80°C und 250°C erwärmt wird.

31. Verfahren nach einem oder mehreren der vorhergehenden Ansprüche, dadurch gekennzeichnet, daß das mehrlagige Bauelement zumindest in den Oberflächenbereichen auf eine Temperatur zwischen 150°C und 250°C erwärmt wird, worauf die Deckschichte mit dem Stützkörper verpreßt wird.

32. Verfahren nach einem oder mehreren der vorhergehenden Ansprüche, dadurch gekennzeichnet, daß der thermoplastische Kunststoff im Tragelement auf eine Temperatur von über 200°C erwärmt wird und in flüssigem Zustand von dem faser- bzw. fadenförmigen Tragkörper entfernt, insbesondere abgesaugt, wird.

33. Verfahren nach einem oder mehreren der vorhergehenden Ansprüche, dadurch gekennzeichnet, daß vor dem Aufpressen der Deckschichte auf den Stützkörper zwischen der Deckschichte und dem Preßwerkzeug eine Decklage eingelegt und diese über den die Deckschichte durchtränkenden thermoplastischen Kunststoff mit der Deckschichte bzw. dem Stützkörper zur gemeinsamen Bewegung bzw. bewegungsfest miteinander verbunden bzw. aneinander angeformt wird.

34. Verfahren nach einem oder mehreren der vorhergehenden Ansprüche, dadurch gekennzeichnet, daß der Stützkörper aus einer Wabenanordnung gebildet wird, wobei die einzelnen Waben aus Stegen gebildet werden.

35. Verfahren nach einem oder mehreren der vorhergehenden Ansprüche, dadurch gekennzeichnet, daß die einzelnen Endbereiche der Stege der einzelnen Waben beim Verpressen der Deckschichte mit der Wabenanordnung unterschiedlich, insbesondere um eine Höhe, verformt werden.

36. Verfahren nach einem oder mehreren der vorhergehenden Ansprüche, dadurch gekennzeichnet, daß im Bereich von zumindest einer der Deckschichten vor dem Verpressen des Bauelementes zumindest ein Einlageteil eingelegt wird und welcher beim Verpreßvorgang in den die Schichte ausbildenden thermoplastischen Kunststoff eingebettet wird.

37. Vorrichtung zur Herstellung eines mehrlagigen Bauelementes, bestehend aus einem Stützkörper und mit diesem kraft- und/oder formschlüssig verbundenen Deckschichten mit einem faser- bzw. fadenförmigen Tragkörper mit einer Fördervorrichtung für den mit thermoplastischem Kunststoff beschichteten bzw. getränkten Tragkörper, der bei Raumtemperatur granuliert, als Folie oder leicht anhaftende Paste vorliegt, dadurch gekennzeichnet, daß die Transportvorrichtung durch zwei parallel in einem einstellbaren Abstand zueinander verlaufende Transportbänder (36), insbesondere aus Teflon, gebildet ist, welchen zumindest über einen Teilbereich ihrer Länge (38) eine Heizvorrichtung (31) zugeordnet ist und daß dieser Transportvorrichtung eine Preßform nachgeordnet ist und daß zwischen der Transportvorrichtung und der Preßvorrichtung (44) eine Handlingvorrichtung (35) für die mit der Schichte (7) aus thermoplastischem Kunststoff (8) getränkten Tragkörper (6) der Deckschichte (2, 3) und dem aus einer Wabenanordnung (5) bestehenden Stützkörper (4) angeordnet ist.

38. Vorrichtung zur Herstellung eines mehrlagigen Bauelementes nach dem vorhergehenden Anspruch, dadurch gekennzeichnet, daß zumindest eine der beiden Formhälften mit Haltevorrichtungen, insbesondere Vakuumschlitzen zur Aufnahme und Halterung einer Deckschichte (2, 3) ausgebildet sind.
